(19) Europäisches Patentamt
European Patent Office
Office européen des brevets

(11) **EP 4 799 979 A1**

(12) **EUROPEAN PATENT APPLICATION**
published in accordance with Art. 153(4) EPC

(43) Date of publication:
**02.09.2026 Bulletin 2026/36**

(21) Application number: **24882703.2**

(22) Date of filing: **08.10.2024**

(51) International Patent Classification (IPC):
***C01B 32/158*** ***(2017.01)*** ***C01B 32/162*** ***(2017.01)***

(52) Cooperative Patent Classification (CPC):
**C01B 32/158; C01B 32/162**

(86) International application number:
**PCT/KR2024/015302**

(87) International publication number:
**WO 2025/089675 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.10.2023 KR 20230144814**

(71) Applicant: **LG Chem, Ltd.**
**Seoul 07336 (KR)**

(72) Inventors:
- **NA, You Wan**
  **Daejeon 34122 (KR)**
- **KIM, Young Joo**
  **Daejeon 34122 (KR)**
- **KIM, Sung Jin**
  **Daejeon 34122 (KR)**
- **KIM, Se Hyun**
  **Daejeon 34122 (KR)**

(74) Representative: **Vossius & Partner**
**Patentanwälte Rechtsanwälte mbB**
**Siebertstraße 3**
**81675 München (DE)**

(54) **CARBON NANOTUBE AND MANUFACTURING METHOD THEREFOR**

(57) The present invention relates to a carbon nanotube satisfying a specific equation, and the carbon nanotube of the present invention is excellent in both productivity and electrical conductivity.

EP 4 799 979 A1

## Description

## TECHNICAL FIELD

### Cross-reference to Related Applications

This application claims the benefit of Korean Patent Application No. 10-2023-0144814, filed on October 26, 2023, in the Korean Intellectual Property Office, the disclosure of which is incorporated herein in its entirety by reference.

### Technical Field

The present invention relates to a novel carbon nanotube having high bulk density and excellent powder resistance, and a method for preparing the same.

## BACKGROUND ART

Carbon nano materials may be divided into fullerene, carbon nanotubes (CNT), graphene, graphite nano plates, and the like according to the shape of a material, and among these, carbon nanotubes are macromolecules in which the surface of a hexagonal honeycomb-shaped graphite in which one carbon atom is bonded to three other carbon atoms is roundly rolled to a nano-sized diameter.

Carbon nanotubes are hollow, and thus, are lightweight, and have electrical conductivity as good as copper, thermal conductivity as excellent as diamond, and tensile strength as good as steel. According to the rolledshape thereof, carbon nanotubes may be divided into single-walled carbon nanotubes (SWCNT), multi-walled carbon nanotubes (MWCNT), and rope carbon nanotubes.

The most representative physical properties of a carbon nanotube are bulk density and specific surface area. The bulk density is a representative physical property representing the productivity of a carbon nanotube, and the specific surface area is a physical property related to the number of walls of a carbon nanotube, which is a physical property related to the performance of the carbon nanotube. The higher the bulk density, the higher the productivity of a carbon nanotube, and the higher the specific surface area, the fewer the number of walls, so that the conductivity of the carbon nanotube tends to be excellent. However, even if the specific surface area is high, if the bulk density of the carbon nanotube increases to a certain level or above at the same time, the conductivity of a carbon nanotube is lowered due to the occurrence of structural singularities of the carbon nanotube.

That is, the productivity of a carbon nanotube and the performance thereof have a complicated correlation, and in general, it is very difficult to synthesize a high-performance carbon nanotube with high productivity. Therefore, there is a need for research on a method for synthesizing a high-performance carbon nanotube, which is particularly excellent in electrical conductivity, with high productivity.

## DISCLOSURE OF THE INVENTION

## TECHNICAL PROBLEM

An object of the present invention is to provide a novel carbon nanotube and a method for preparing the same, wherein the carbon nanotube is capable of exhibiting high productivity, and also is capable of implementing electrical conductivity similar to or superior to a typical commercial carbon nanotube in terms of performance.

## TECHNICAL SOLUTION

In order to achieve the above-described object, the present invention provides a novel carbon nanotube and a method for preparing the carbon nanotube.

(1) Specifically, the present invention provides a carbon nanotube satisfying Equation 1 below:

[Equation 1]

$$1.6541 * A + 0.6823 \leq R \leq 1.6541 * A + 1.6823$$

In Equation 1 above, R is powder resistance (mΩ·cm) of the carbon nanotube, and A is ln { (specific surface area ($m^2/g$) of carbon nanotube * bulk density ($kg/m^3$)) / purity (wt %) }

(2) In (1) above, the present invention provides a carbon nanotube, wherein the specific surface area of the carbon nanotube is 320 $m^2/g$ or less.

(3) In (1) or (2) above, the present invention provides a carbon nanotube, wherein the bulk density of the carbon nanotube is 80 $kg/m^3$ or greater.

(4) In any one among (1) to (3) above, the present invention provides a carbon nanotube, wherein the purity of the carbon nanotube is 93 wt% or greater.

(5) In any one among (1) to (4) above, the present invention provides a carbon nanotube, wherein the R is 12 mΩ·cm or less.

(6) In any one among (1) to (5) above, the present invention provides a carbon nanotube, wherein the A is 4.5 to 6.5.

(7) The present invention provides a method for preparing a carbon nanotube according to any one among (1) to (6) above, the method including S1 reacting a carbon source gas in the presence of a supported catalyst, thereby synthesizing a carbon nanotube, wherein in the supported catalyst, cobalt and vanadium are supported on a support, and the content of the cobalt based on the total weight of the supported catalyst is 14 wt% to 30 wt%.

(8) In (7) above, the present invention provides a method for preparing a carbon nanotube, wherein the molar ratio (V/Co) of the vanadium to the cobalt in the supported catalyst is 0.05 to 0.25.

## ADVANTAGEOUS EFFECTS

Although the bulk density of a carbon nanotube of the present invention is three times higher than that of a typical commercial carbon nanotube, the carbon nanotube exhibits a level that is equal to or higher than that of the typical commercial carbon nanotube in terms of powder resistance, so that the carbon nanotube is particularly suitable for use in various fields requiring high productivity and conductivity at the same time.

## MDOE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

The term 'carbon nanotube' used in the present invention refers to a secondary structure in which units of a carbon nanotube are assembled to form a bundle shape in whole or in part, and the units of a carbon nanotube have a graphite sheet in a cylindrical shape having a nano-sized diameter, and have a sp2 bonding structure. At this time, depending on the angle and structure in which the graphite sheet is rolled, conductor properties or semiconductor properties may be exhibited. Depending on the number of bonds forming a wall, the units of a carbon nanotube may be classified into a single-walled carbon nanotube (SWCNT), a double-walled carbon nanotube (DWCNT), and a multi-walled carbon nanotube (MWCNT), and the thinner the wall, the lower the resistance.

A carbon nanotube of the present invention may include one or two or more of a single-walled carbon nanotube unit, a double-walled carbon nanotube unit, and a multi-walled carbon nanotube unit.

### Carbon nanotube

The present invention provides a carbon nanotube satisfying Equation 1 below.

[Equation 1]

$$1.6541 * A + 0.6823 \leq R \leq 1.6541 * A + 1.6823$$

In Equation 1 above, R is powder resistance (mΩ·cm) of the carbon nanotube, and A is ln { (specific surface area ($m^2/g$) of carbon nanotube * bulk density ($kg/m^3$)) / purity (wt%)}

The inventors of the present invention have studied a method capable of increasing the productivity of a carbon nanotube while maintaining the performance of the carbon nanotube at the same level, and as a result, have confirmed that if the powder resistance, the purity, the specific surface area, and the bulk density of a carbon nanotube satisfy Equation 1 above, the productivity and the electrical conductivity of the carbon nanotube may be maintained at an excellent level, and have completed the present invention.

More specifically, if preparation conditions of a catalyst used in the preparation of a carbon nanotube are

changed, specifically the content of an active ingredient, the ratio of a main catalyst component to a co-catalyst component, the content of an organic acid in a precursor solution, the firing temperature, or the like, physical properties of the carbon nanotube prepared from the corresponding catalyst also change. Accordingly, by changing the preparation conditions of a catalyst, it is possible to synthesize various carbon nanotubes having different physical properties from each other. Furthermore, as a result of confirming the correlation between the productivity and the electrical conductivity of various synthesized carbon nanotubes in various ways, it has been confirmed that a carbon nanotube prepared under specific conditions satisfy Equation 1 above, and thus, is excellent in both productivity and electrical conductivity.

More specifically, Equation 1 above means that there is a correlation between the powder resistance of a carbon nanotube, and the purity, the specific surface area, and the bulk density thereof. Equation 1 above is derived on the basis of data of carbon nanotubes synthesized using catalysts prepared under various conditions, and unlike the fact that in general, the productivity and the electrical conductivity of a carbon nanotube are in a trade-off relationship, it can be confirmed that a carbon nanotube prepared under specific conditions satisfies Equation 1 above, and thus, is excellent in both productivity and electrical conductivity.

In Equation 1 above, an A value and a R value are values having different units from each other, but in the present invention, the unit of each value is ignored and it is assumed that the each value is a dimensionless number. However, since the each value may vary depending on the unit of each of the powder resistance, the purity, the specific surface area, and the bulk density of a carbon nanotube, which are variables of the each value, the unit of each variable is fixed as follows in applying Equation 1.

Unit of powder resistance (R) of carbon nanotube: mΩ·cm
Unit of purity of carbon nanotube: wt%
Unit of specific surface area of carbon nanotube: ($m^2/g$)
Unit of bulk density of carbon nanotube: $kg/m^3$

Meanwhile, in the carbon nanotube provided by the present invention, the carbon nanotube may have a specific surface area of 320 $m^2/g$ or less, and preferably, 320 $m^2/g$ or less, 310 $m^2/g$ or less, or 300 $m^2/g$ or less, and preferably, 250 $m^2/g$ or greater, 260 $m^2/g$ or greater, 270 $m^2/g$ or greater, or 280 $m^2/g$ or greater. As described above, the specific surface area is a factor directly affecting the performance of a carbon nanotube, and the carbon nanotube of the present invention has a specific surface area within the above-described range, and thus, may exhibit excellent electrical conductivity. Meanwhile, the specific surface area may be measured according to a BET method, and more specifically, may be calculated by obtaining the amount of nitrogen gas adsorption at a liquid nitrogen temperature (77 K) using BELSORP-mini II of BEL Japan Co., Ltd.

Furthermore, the carbon nanotube of the present invention may have a bulk density of 80 $kg/m^3$ or greater, and preferably, 80 $kg/m^3$ or greater, 85 $kg/m^3$ or greater, 90 $kg/m^3$ or greater, or 95 $kg/m^3$ or greater, and 120 $kg/m^3$ or less, 115 $kg/m^3$ or less, 110 $kg/m^3$ or less, or 105 $kg/m^3$ or less. The bulk density is a factor capable of exhibiting the productivity of a carbon nanotube, and the carbon nanotube of the present invention has a bulk density within the above-described range, and thus, may have excellent productivity. A value of the bulk density of the carbon nanotube of the present invention is higher than that of a typical commercial carbon nanotube, and compared to the typical commercial carbon nanotube, the carbon nanotube of the present invention may be prepared in a sufficiently large amount even with the use of a small amount of a catalyst. Meanwhile, the bulk density may be calculated by measuring the weight of a carbon nanotube contained in a container by free fall using a 25ml SUS quantitative cup, and dividing the measured weight by the volume of the container.

In addition, the carbon nanotube of the present invention may have a purity of 93 wt% or greater, and particularly preferably, 93.5 wt% or greater, 94 wt% or greater, 94.5 wt% or greater, or 95 wt% or greater. The purity means the content of a carbon nanotube remaining after impurities in the carbon nanotube are removed, and may be calculated through the following equation.

Purity = (carbon nanotube yield - catalyst input) / carbon nanotube yield * 100%

The purity is also an index capable of exhibiting the productivity of a carbon nanotube, similar to the bulk density of a carbon nanotube described above, and it can be confirmed that the carbon nanotube of the present invention exhibits high productivity even with the above-described purity value.

In addition, the R, which is the powder resistance of the carbon nanotube of the present invention, may be 12 mΩ·cm or less, and particularly preferably 12 mΩ·cm or less, 11.5 mΩ·cm or less, 11.3 mΩ·cm or less, or 11 mΩ·cm or less, and 10 mΩ·cm or greater, 10.2 mΩ·cm or greater, 10.4 mΩ·cm or greater, or 10.5 mΩ·cm or greater. As described above, the carbon nanotube of the present invention has high productivity but low powder resistance, and thus, may have excellent electrical conductivity. Meanwhile, the powder resistance may be resistance according to a pressure when the

compression density is 1 g/cc measured using the MCP-PD51 equipment of Nittoseiko Analytech Co., Ltd.

In addition, in the carbon nanotube of the present invention, the A value calculated from the specific surface area, the bulk density, and the purity described above may be 4.5 to 6.5, and preferably 5 to 6.

**Method for preparing carbon nanotube**

The present invention provides a method for synthesizing a carbon nanotube satisfying Equation 1 described above.

More specifically, the present invention provides a method for preparing a carbon nanotube, the method including S1 reacting a carbon source gas in the presence of a supported catalyst, thereby synthesizing a carbon nanotube, wherein in the supported catalyst, cobalt and vanadium are supported on a support, and the content of the cobalt based on the total weight of the supported catalyst is 14 wt% to 30 wt%.

The carbon nanotube of the present invention may be prepared only if a catalyst prepared under specific conditions is used, and conditions required for the catalyst used in the preparation of the carbon nanotube of the present invention are that cobalt and vanadium are supported, and the content of the cobalt is 14 wt% to 30 wt% based on the total weight of the catalyst.

In the supported catalyst, if the content of the cobalt is less than or greater than that described above, the powder resistance of a carbon nanotube obtained from the catalyst may increase, and in some cases, the specific surface area thereof may also increase, which may lower the electrical conductivity of the carbon nanotube.

Meanwhile, in the supported catalyst, the molar ratio (V/Co) of the vanadium to the cobalt in the supported catalyst may be 0.05 to 0.25. If the molar ratio is low, so that the vanadium is not included, or included in a very small amount in the catalyst, the powder resistance of a carbon nanotube prepared from the corresponding catalyst may be significantly increased, and if the molar ratio is high, the bulk density of the carbon nanotube may be significantly decreased, which may degrade productivity.

Meanwhile, the supported catalyst may be prepared by immersing a support in an aqueous precursor solution in which a cobalt precursor and a vanadium precursor are dissolved, followed by drying and firing, and in this process, properties of the catalyst may vary depending on the amount of a multi-carboxylic acid included in the aqueous precursor solution. In the case of the supported catalyst of the present invention, it may be preferable that the molar ratio (multi-carboxylic acid/V) between the multi-carboxylic acid and the vanadium is 0.3 to 1.0, and it is possible to prepare a carbon nanotube having lower powder resistance using a catalyst prepared in this range. Meanwhile, citric acid may be used as the multi-carboxylic acid.

In addition, a porous metal oxide may be used as the support of the supported catalyst, and more specifically, one or more selected from the group consisting of hydrotalcite, alumina ($Al_2O_3$), magnesium peroxide ($MgO_2$), magnesium oxide (MgO), and boehmite may be used.

In addition, in the method for preparing the carbon nanotube of the present invention, the carbon source gas is a carbon-containing gas which may be decomposed at a high temperature to form carbon nanotubes, and specific examples thereof may include various carbon-containing compounds such as aliphatic alkanes, aliphatic alkenes, aliphatic alkynes, aromatic compounds, and the like, and more specifically, a compound of methane, ethane, ethylene, acetylene, ethanol, methanol, acetone, carbon monoxide, propane, butane, benzene, cyclohexane, propylene, butene, isobutene, toluene, xylene, cumene, ethylbenzene, naphthalene, phenanthrene, anthracene, acetylene, formaldehyde, acetaldehyde, and the like may be used.

In addition, in the method for preparing the carbon nanotube of the present invention, a reaction of a carbon source gas may be heating the carbon source gas in the presence of the supported catalyst, and the temperature of the heating may be 600 °C to 800 °C. In addition, a reactor in which the reaction is performed may be a chemical vapor deposition reactor, a fixed bed reactor, or a fluidized bed reactor.

Hereinafter, the present invention will be described in more detail with reference to examples and experimental examples, but the present invention is not limited by these examples and experimental examples. The examples according to the present invention may be modified into other various forms, and the scope of the present invention should not be construed as being limited to the examples to be described below. The examples of the present invention are provided to more fully describe the present invention to those skilled in the art.

**Catalyst Preparation Examples**

$Co(NO_3)_2 \cdot 6H_2O$ was used as a cobalt precursor, and $NH_4VO_3$ was used as a vanadium precursor. The cobalt precursor and the vanadium precursor were dissolved in water, and citric acid anhydride (CA) was dissolved theretogether using a multi-carboxylic acid, which is a complexing agent, to prepare a precursor aqueous solution. The catalyst precursor composition was sufficiently stirred, and then introduced into hydrotalcite, which is a support. Thereafter, the mixture was dried at 190 °C for 3 hours using an oven, and then fired at 680 °C in the atmosphere for 1 hour to complete a catalyst. In the

above-described process, the cobalt content, the V/Co molar ratio, and the citric acid/V molar ratio of a finally prepared catalyst were adjusted in various ways to prepare various types of catalysts, and preparation conditions of a catalyst in each preparation example are summarized in Table 1 below.

[Table 1]

| | Co content (wt%) of catalyst | V/Co (molar ratio) | CA/V (molar ratio) |
|---|---|---|---|
| Catalyst Preparation Example 1-1 | 13 | 0.1 | 0.5 |
| Catalyst Preparation Example 1-2 | 14 | 0.1 | 0.5 |
| Catalyst Preparation Example 1-3 | 16 | 0.1 | 0.5 |
| Catalyst Preparation Example 1-4 | 18 | 0.1 | 0.5 |
| Catalyst Preparation Example 1-5 | 20 | 0.1 | 0.5 |
| Catalyst Preparation Example 1-6 | 22 | 0.1 | 0.5 |
| Catalyst Preparation Example 1-7 | 24 | 0.1 | 0.5 |
| Catalyst Preparation Example 1-8 | 26 | 0.1 | 0.5 |
| Catalyst Preparation Example 1-9 | 30 | 0.1 | 0.5 |
| Catalyst Preparation Example 1-10 | 35 | 0.1 | 0.5 |
| Catalyst Preparation Example 1-11 | 40 | 0.1 | 0.5 |
| Catalyst Preparation Example 2-1 | 20 | 0 | - |
| Catalyst Preparation Example 2-2 | 20 | 0.05 | 0.5 |
| Catalyst Preparation Example 2-3 | 20 | 0.1 | 0.5 |
| Catalyst Preparation Example 2-4 | 20 | 0.2 | 0.5 |
| Catalyst Preparation Example 2-5 | 20 | 0.25 | 0.5 |
| Catalyst Preparation Example 2-6 | 20 | 0.3 | 0.5 |
| Catalyst Preparation Example 3-1 | 20 | 0.1 | 0.1 |
| Catalyst Preparation Example 3-2 | 20 | 0.1 | 0.3 |
| Catalyst Preparation Example 3-3 | 20 | 0.1 | 0.5 |
| Catalyst Preparation Example 3-4 | 20 | 0.1 | 1.0 |
| Catalyst Preparation Example 3-5 | 20 | 0.1 | 1.5 |
| CA: Citric acid anhydride | | | |

**Examples and Comparative Examples**

The catalysts used in Catalyst Preparation Examples above were used to synthesize carbon nanotubes. Specifically, a fluidized bed reactor was filled with 6.4 g of the prepared catalyst, and then a nitrogen gas was injected into the reactor at 3,000 sccm, and the temperature inside the reactor was raised to 690 °C by heating. Thereafter, an ethylene gas, which is a carbon source gas, was injected at 1,000 sccm, thereby continuing the reaction for 120 minutes to synthesize a carbon nanotube. The catalyst used in each of Examples and Comparative Examples are summarized in Table 2 below.

[Table 2]

| | Catalyst used | Catalyst properties | | |
|---|---|---|---|---|
| | | Co content (wt%) of catalyst | V/Co (molar ratio) | CA/V (molar ratio) |
| Comparative Example 1-1 | Catalyst Preparation Example 1-1 | 13 | 0.1 | 0.5 |
| Example 1-1 | Catalyst Preparation Example 1-2 | 14 | 0.1 | 0.5 |

(continued)

| | Catalyst used | Catalyst properties | | |
|---|---|---|---|---|
| | | Co content (wt%) of catalyst | V/Co (molar ratio) | CA/V (molar ratio) |
| Example 1-2 | Catalyst Preparation Example 1-3 | 16 | 0.1 | 0.5 |
| Example 1-3 | Catalyst Preparation Example 1-4 | 18 | 0.1 | 0.5 |
| Example 1-4 | Catalyst Preparation Example 1-5 | 20 | 0.1 | 0.5 |
| Example 1-5 | Catalyst Preparation Example 1-6 | 22 | 0.1 | 0.5 |
| Example 1-6 | Catalyst Preparation Example 1-7 | 24 | 0.1 | 0.5 |
| Example 1-7 | Catalyst Preparation Example 1-8 | 26 | 0.1 | 0.5 |
| Example 1-8 | Catalyst Preparation Example 1-9 | 30 | 0.1 | 0.5 |
| Comparative Example 1-2 | Catalyst Preparation Example 1-10 | 35 | 0.1 | 0.5 |
| Comparative Example 1-3 | Catalyst Preparation Example 1-11 | 40 | 0.1 | 0.5 |
| Comparative Example 2-1 | Catalyst Preparation Example 2-1 | 20 | 0 | - |
| Example 2-1 | Catalyst Preparation Example 2-2 | 20 | 0.05 | 0.5 |
| Example 2-2 | Catalyst Preparation Example 2-3 | 20 | 0.1 | 0.5 |
| Example 2-3 | Catalyst Preparation Example 2-4 | 20 | 0.2 | 0.5 |
| Example 2-4 | Catalyst Preparation Example 2-5 | 20 | 0.25 | 0.5 |
| Comparative Example 2-2 | Catalyst Preparation Example 2-6 | 20 | 0.3 | 0.5 |
| Comparative Example 3-1 | Catalyst Preparation Example 3-1 | 20 | 0.1 | 0.1 |
| Example 3-1 | Catalyst Preparation Example 3-2 | 20 | 0.1 | 0.3 |
| Example 3-2 | Catalyst Preparation Example 3-3 | 20 | 0.1 | 0.5 |
| Example 3-3 | Catalyst Preparation Example 3-4 | 20 | 0.1 | 1.0 |
| Comparative Example 3-2 | Catalyst Preparation Example 3-5 | 20 | 0.1 | 1.5 |

**Experimental Example 1. Confirmation of whether prepared carbon nanotube satisfies Equation 1**

The purity, the specific surface area, the bulk density, and the powder resistance of the carbon nanotubes prepared in Examples and Comparative Examples above, and five types of commercial carbon nanotubes were measured, and whether Equation 1 was satisfied was confirmed. Each physical property was measured in the following manner.

1) Purity: (Carbon nanotube yield - catalyst input) / carbon nanotube yield * 100%
2) Specific surface area: The specific surface area was calculated by obtaining the amount of nitrogen gas adsorption at a liquid nitrogen temperature (77 K) using BELSORP-mini II of BEL Japan Co., Ltd.
3) Bulk density: The bulk density was calculated by measuring the weight of a carbon nanotube contained in a container by free fall using a 25ml SUS quantitative cup, and dividing the measured weight by the volume of the container.
4) Powder resistance: Resistance according to a pressure when the compression density is 1 g/cc was measured using the MCP-PD51 equipment of Nittoseiko Analytech Co., Ltd.

The results of the measurements are summarized in Table 3 below.

[Table 3]

| | Bulk density (kg/m$^3$) | Specific surface area (m$^2$/g) | Purity (wt%) | Powder resistance (mΩ·cm) | Whether Equation 1 is satisfied |
|---|---|---|---|---|---|
| Comparative Example 1-1 | 119 | 335 | 92.4 | 12.4 | X |
| Example 1-1 | 115 | 312 | 95.2 | 11.4 | O |
| Example 1-2 | 106 | 275 | 95.8 | 10.2 | O |
| Example 1-3 | 102 | 298 | 95.6 | 10.4 | O |
| Example 1-4 | 102 | 275 | 96.1 | 10.3 | O |
| Example 1-5 | 101 | 256 | 95.8 | 10.0 | O |
| Example 1-6 | 98 | 286 | 95.8 | 10.1 | O |
| Example 1-7 | 95 | 279 | 95.7 | 10.2 | O |
| Example 1-8 | 105 | 288 | 97.1 | 11.1 | O |
| Comparative Example 1-2 | 113 | 277 | 97.5 | 13.4 | X |
| Comparative Example 1-3 | 125 | 269 | 97.5 | 16.9 | X |
| Comparative Example 2-1 | 160 | 181 | 79.5 | 18.1 | X |
| Example 2-1 | 116 | 294 | 93.9 | 10.7 | O |
| Example 2-2 | 102 | 275 | 96.1 | 10.3 | O |
| Example 2-3 | 87 | 286 | 96.7 | 10.7 | O |
| Example 2-4 | 82 | 280 | 96.8 | 10.7 | O |
| Comparative Example 2-2 | 79 | 275 | 97.0 | 11.8 | X |
| Comparative Example 3-1 | 115 | 345 | 94.4 | 12.9 | X |
| Example 3-1 | 107 | 268 | 96.4 | 10.9 | O |
| Example 3-2 | 102 | 275 | 96.1 | 10.3 | O |
| Example 3-3 | 97 | 294 | 95.4 | 11.1 | O |
| Comparative Example 3-2 | 91 | 311 | 91.8 | 14.5 | X |

As can be confirmed from Table 3 above, the carbon nanotubes according to Examples of the present invention satisfy Equation 1. Meanwhile, the carbon nanotubes according to Comparative Examples do not satisfy Equation 1.

From the above-described results, it was confirmed that the carbon nanotube of the present invention has excellent productivity and electrical conductivity, which are known to be in a typical trade-off relationship.

## Claims

**1.** A carbon nanotube satisfying Equation 1 below:

[Equation 1]

$$1.6541 * A + 0.6823 \leq R \leq 1.6541 * A + 1.6823$$

wherein in Equation 1 above,
R is powder resistance (mΩ·cm) of the carbon nanotube, and
A is ln { (specific surface area (m$^2$/g) of carbon nanotube * bulk density (kg/m$^3$)) / purity (wt%)}.

**2.** The carbon nanotube of claim 1, wherein the specific surface area of the carbon nanotube is 320 m$^2$/g or less.

**3.** The carbon nanotube of claim 1, wherein the bulk density of the carbon nanotube is 80 kg/m$^3$ or greater.

**4.** The carbon nanotube of claim 1, wherein the purity of the carbon nanotube is 93 wt% or greater.

**5.** The carbon nanotube of claim 1, wherein the R is 12 mΩ·cm or less.

**6.** The carbon nanotube of claim 1, wherein the A is 4.5 to 6.5.

**7.** A method for preparing the carbon nanotube of claim 1, the method comprising
(S1) reacting a carbon source gas in the presence of a supported catalyst, thereby synthesizing a carbon nanotube, wherein:

in the supported catalyst, cobalt and vanadium are supported on a support; and
the content of the cobalt based on the total weight of the supported catalyst is 14 wt% to 30 wt%.

**8.** The method of claim 7, wherein the molar ratio (V/Co) of the vanadium to the cobalt in the supported catalyst is 0.05 to 0.25.

## INTERNATIONAL SEARCH REPORT

International application No.
**PCT/KR2024/015302**

**A. CLASSIFICATION OF SUBJECT MATTER**

**C01B 32/158**(2017.01)i; **C01B 32/162**(2017.01)i

According to International Patent Classification (IPC) or to both national classification and IPC

**B. FIELDS SEARCHED**

Minimum documentation searched (classification system followed by classification symbols)

C01B 32/158(2017.01); B01J 23/84(2006.01); B01J 37/02(2006.01); C01B 13/14(2006.01); C01B 31/02(2006.01); H01B 1/24(2006.01); H01B 13/00(2006.01); H01M 10/052(2010.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소나노튜브(carbon nanotube), 분체저항(powder resistance), 비표면적(specific surface area), 벌크 밀도(bulk density), 순도(purity), 담지 촉매(supported catalyst), 코발트(cobalt), 바나듐(vanadium)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0083396 A (LG CHEM, LTD.) 20 June 2022 (2022-06-20)<br>See paragraphs [0006], [0031]-[0040], [0068], [0072], [0087], [0088] and [0100]-[0102]; and claims 1, 2, 9 and 10. | 1-8 |
| A | KR 10-2019-0078486 A (LG CHEM, LTD.) 04 July 2019 (2019-07-04)<br>See entire document. | 1-8 |
| A | KR 10-2017-0031061 A (LG CHEM, LTD.) 20 March 2017 (2017-03-20)<br>See entire document. | 1-8 |
| A | KR 10-2017-0028117 A (KOREA INSTITUTE OF ENERGY RESEARCH) 13 March 2017 (2017-03-13)<br>See entire document. | 1-8 |
| A | KR 10-2019-0096738 A (LG CHEM, LTD.) 20 August 2019 (2019-08-20)<br>See entire document. | 1-8 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 January 2025** | **14 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/015302**

| Patent document cited in search report | Publication date (day/month/year) | Patent family member(s) | Publication date (day/month/year) |
|---|---|---|---|
| KR 10-2022-0083396 A | 20 June 2022 | CN 115989084 A | 18 April 2023 |
| | | EP 4260939 A1 | 18 October 2023 |
| | | JP 2023-543177 A | 13 October 2023 |
| | | TW 202239472 A | 16 October 2022 |
| | | US 2023-0381753 A1 | 30 November 2023 |
| | | WO 2022-124799 A1 | 16 June 2022 |
| KR 10-2019-0078486 A | 04 July 2019 | CN 110785378 A | 11 February 2020 |
| | | CN 110785378 B | 02 May 2023 |
| | | EP 3628641 A1 | 01 April 2020 |
| | | KR 10-2379595 B1 | 29 March 2022 |
| | | TW 201930188 A | 01 August 2019 |
| | | TW I797209 B | 01 April 2023 |
| | | US 11565938 B2 | 31 January 2023 |
| | | US 2021-0276871 A1 | 09 September 2021 |
| | | WO 2019-132266 A1 | 04 July 2019 |
| KR 10-2017-0031061 A | 20 March 2017 | CN 107735890 A | 23 February 2018 |
| | | CN 107735890 B | 10 November 2020 |
| | | EP 3349280 A1 | 18 July 2018 |
| | | EP 3349280 B1 | 02 December 2020 |
| | | JP 2018-530854 A | 18 October 2018 |
| | | JP 6598223 B2 | 30 October 2019 |
| | | KR 10-1923466 B1 | 30 November 2018 |
| | | US 10665890 B2 | 26 May 2020 |
| | | US 2018-0175439 A1 | 21 June 2018 |
| | | WO 2017-043919 A1 | 16 March 2017 |
| KR 10-2017-0028117 A | 13 March 2017 | CN 106505216 A | 15 March 2017 |
| | | CN 106505216 B | 12 November 2019 |
| | | KR 10-1791484 B1 | 30 October 2017 |
| | | KR 10-1807530 B1 | 12 December 2017 |
| | | KR 10-2017-0028116 A | 13 March 2017 |
| | | US 10141579 B2 | 27 November 2018 |
| | | US 2017-0069916 A1 | 09 March 2017 |
| KR 10-2019-0096738 A | 20 August 2019 | KR 10-2425557 B1 | 26 July 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230144814